# EUROPÄISCHE PATENTANMELDUNG

(11) **EP 2 082 865 A2**
(43) Veröffentlichungstag der Anmeldung: **29.07.2009**
(21) Anmeldenummer: 08002165.2
(22) Anmeldetag: 06.02.2008
(51) Int. Cl.: B29D 23/00, B29B 13/02, A01G 25/02, B29C 47/10, B29C 47/78, B29C 47/88, B29B 13/10

(54) **Verfahren zur Herstellung eines porösen Schlauchs**

(30) Priorität: 25.01.2008 DE 102008006276
(71) Anmelder: Friedel, Gerhard, 64407 Fränkisch Crumbach (DE); Fuchs, Jürgen, 07589 Münchenbernsdorf (DE)
(72) Erfinder: Friedel, Gerhard, 64407 Fränkisch Crumbach (DE); Fuchs, Jürgen, 07589 Münchenbernsdorf (DE)
(74) Vertreter: Förster, Susanne

(57) **Zusammenfassung**

Die Erfindung betrifft ein Verfahren zur Herstellung eines porösen Schlauchs (1) zur Bewässerung und/oder Entwässerung mit folgenden Verfahrensschritten:
a) Herstellen eines weitgehend homogenen Gemisches aus Partikeln (2) aus vulkanisiertem Kautschuk sowie Partikeln eines thermoplastischen Bindemittels,
b) Einführen des Gemisches in einen Extruder (11), in welchem es erwärmt wird,
c) Ausformen des Gemisches in Form eines Schlauches (1) über ein Mundstück aus dem Extruder (11),
d) Abkühlen des Schlauches (1),

wobei die Partikel (2) aus vulkanisiertem Kautschuk im Wesentlichen eine Partikelgröße im Bereich von 1,3 - 5,0 mm besitzen.

## Beschreibung

Die vorliegende Erfindung betrifft ein Verfahren zur Herstellung eines porösen Schlauches zur Bewässerung gemäß dem kennzeichnenden Teil des Anspruchs 1, einen porösen Schlauch, der durch das erfindungsgemäße Verfahren hergestellt worden ist sowie die Verwendung eines porösen Schlauchs zur Bewässerung sowie Entwässerung von Kulturboden.

Aus der WO 95/23681 ist ein gattungsgemäßes Verfahren gemäß dem Anspruch 1 bereits bekannt. In dem Verfahren werden Partikel aus vulkanisiertem Kautschuk verwendet, die in einem Größenbereich von 0,35 - 1,2 mm liegen. Es handelt sich hierbei um einen mehlartigen Ausgangsstoff, der üblicherweise zugeliefert werden musste und oftmals noch Gewebeanteile enthielt, die dazu geführt hatten, dass Nester in dem erwärmten Gemisch entstanden, die wiederum eine Beschädigung des Schlauchs mit sich brachten. Das vorgenannte Verfahren begründete verschiedene Nachteile. Die mehlartigen Partikel neigten während des Herstellungsvorgangs zu Verklumpungen, was zu einer ungleichmäßigen Zuführung und damit zu Ungleichmäßigkeiten beim Endprodukt geführt hat. Aufgrund der Feinheit der Partikel musste zudem ein vergleichsweise hoher Anteil an thermoplastischem Bindemittel verwendet werden. Auch die Bewässerungseigenschaften des porösen Schlauchs als solche einschließlich seiner mechanischen Stabilität waren nachteilig.

Die Aufgabe der vorliegenden Erfindung besteht darin, ein Verfahren zur Herstellung eines porösen Schlauchs zur Verfügung zu stellen, mittels welchem poröse Schläuche mit verbesserten Eigenschaften hergestellt werden können.

Die vorstehende Aufgabe wird bei dem gattungsgemäßen Verfahren nach Anspruch 1 damit gelöst, dass die Partikel aus vulkanisiertem Kautschuk im Wesentlichen eine Partikelgröße im Bereich von 1,3 - 5,0 mm besitzen oder zumindest 70 - 90 % der Gauß'schen Korngrößenverteilung in diesem Bereich liegt. Das erfindungsgemäße Verfahren führt zu einer Reduzierung des notwendigen Bindemittelanteils, z.B. Polyethylenanteils. Darüber hinaus kann aufgrund der gewählten Partikelgrößen die Verkleinerung auch vor Ort, d.h. im Ablauf des Produktionsprozesses vorgenommen werden, beispielsweise mit einer Zerkleinerungsvorrichtung. Darüber hinaus kommt es beim Extrusionsprozess zu keinen Verklumpungen mehr.

Zweckmäßigerweise liegen die Partikelgrößen als solche bzw. zumindest 70 - 90 % der Gauß'schen Korngrößenverteilung in einem Bereich von 1,3 - 3,0 mm, besonders zweckmäßigerweise in einem Bereich 1,3 - 2,0 mm.

Ferner enthält das in dem Verfahren verwendete Gemisch einen Anteil an vulkanisiertem Kautschuk von mehr als 60 Gew.-%, vorzugsweise mehr als 70 Gew.-%. Dies resultiert zum einen in einer verbesserten Porosität und damit Bewässerungseigenschaft zum anderen in vorteilhafteren mechanischen Eigenschaften (bessere Biegsamkeit, keine Knickbildung, Stabilität bei Entwässerung, d.h. kein Zusammenziehen bei Entwässerung).

Zweckmäßigerweise werden vorzugsweise vor der Herstellung des homogenen Gemisches die Partikel aus vulkanisiertem Kautschuk auf eine Temperatur im Bereich von 30 - 70° C, vorzugsweise 40 - 65° C erwärmt, wodurch sich eine optimale Verbindung mit dem Bindemittel ergibt und daraus resultierend eine Qualitätsverbesserung des Schlauchs.

Aufgrund der Zerkleinerung der Partikel aus vulkanisiertem Kautschuk im Rahmen einer Zerkleinerungsvorrichtung (Mühle) wird in vorteilhafter Weise die Erwärmung gleichzeitig mit der Zerkleinerung erzielt.

Vor der Herstellung des homogenen Gemisches werden Gewebepartikel aus dem vulkanisierten Kautschuk, vorzugsweise im Rahmen der Zerkleinerung in der Zerkleinerungseinrichtung, abgesaugt. Daraus resultiert der Vorteil, dass es keine Ausbildung von nachteiligen Nestern mehr gibt.

Alternativ kann die Erwärmung auch mittels Warmluft, Heizstrahlung oder eine Heizeinrichtung, die an der Außenseite der Transporteinrichtung, beispielsweise in Form einer Heizmatte oder dergleichen vorgesehen sein kann, durchgeführt werden.

Ferner wird in zweckmäßiger Weise eine Farbmarkierung während des Herstellungsprozesses in den Schlauch unter Verwendung z.B. eines Beispritzextruders eingebracht.

Zur Abkühlung des Schlauchs ist mindestens ein Sprühkamm vorgesehen. Dies führt zu einer Vorabkühlung des hergestellten Schlauchs, bevor er in ein Wasserbad taucht.

Nach dem Verlassen des Wasserbades wird der Schlauch in einem Luftstrom getrocknet. Zudem beansprucht die vorliegende Erfindung einen porösen Schlauch sowie die Verwendung eines entsprechenden Schlauchs zur Be- als auch Entwässerung von Böden, insbesondere Kulturböden.

Eine zweckmäßige Ausgestaltung der vorliegenden Erfindung wird anhand der Zeichnungsfiguren näher erläutert. Es zeigen:
- Fig.1: eine Darstellung des erfindungsgemäßen porösen Schlauchs im Querschnitt (Fig. 1A) sowie in Seitenansicht sowie
- Fig.2: eine stark vereinfachte schematische Darstellungsweise der Herstellung des erfindungsgemäßen porösen Schlauchs.

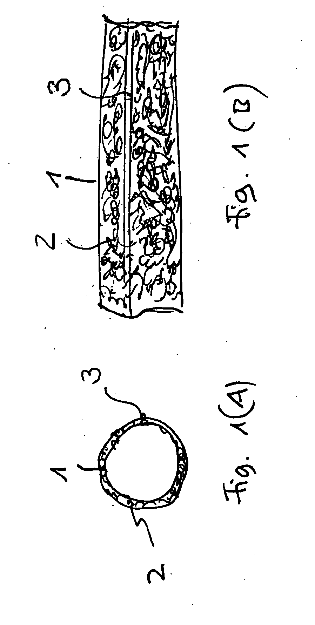

Bezugsziffer 1 in Fig. 1 bezeichnet den porösen Schlauch. Er besteht aus einem Gemenge von Partikeln 2 aus vulkanisiertem Kautschuk sowie einem thermoplastischen Bindemittel, wie z.B. Polyethylen. Das Bindemittel verbindet die einzelnen Partikel derart miteinander, dass von der Schlauchinnenseite zur Schlauchaußenseite Durchlässe bestehen, die es ermöglichen, dass das im Schlauch befindliche Wasser entlang der Längserstreckung des Schlauchs ins Erdreich entweichen kann. Darüber hinaus kann der Schlauch 1 auch zur Entwässerung eingesetzt werden.

Erfindungsgemäß liegt die Größe der zu verwendenden Partikel in einem Bereich von 1,3 mm - 5,0 mm, vorzugsweise 1,3 - 3,0 mm, vorzugsweise 1,3 - 2,0 mm. Zumindest sollen gerade bei dieser Partikelgrößenauswahl stellen sich ganz besondere Vorteile ein. Vorzugsweise liegen 70 - 90 % der Partikel unter Bezugnahme auf die Gauß'sche Korngrößenverteilung in diesem Größenbereich.

Der Anteil an vulkanisiertem Kautschuk des Gemisches aus vulkanisiertem Kautschuk und Bindemittel liegt bei mehr als 60 Gew.-%, vorzugsweise bei mehr als 70 Gew.-%.

Fig. 1b zeigt in der Seitendarstellung des Schlauchs eine im Herstellungsprozess eingebrachte linienförmige Farbmarkierung 3. Deren Herstellung wird nachstehend näher erläutert.

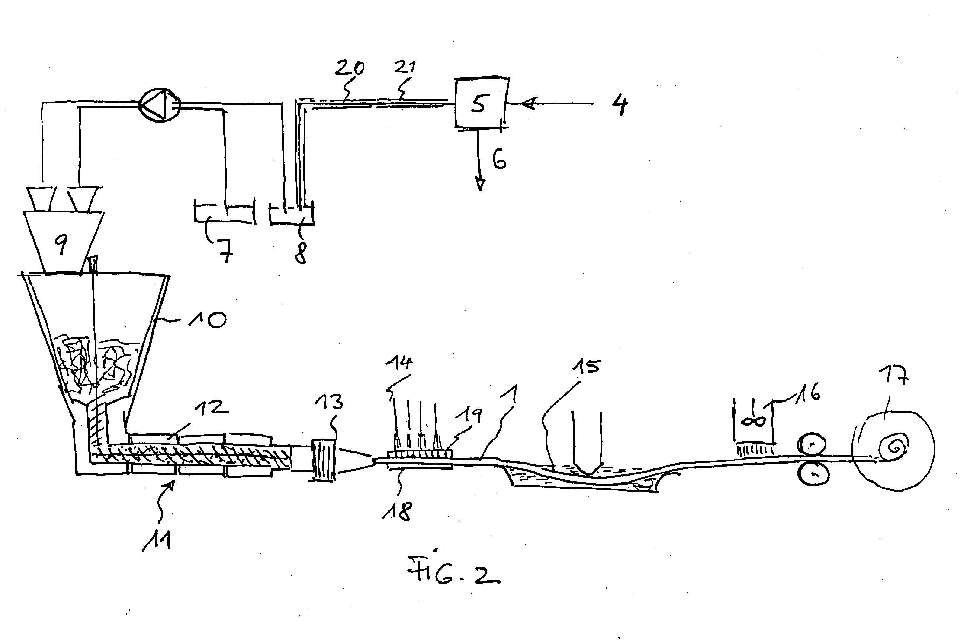

In der Fig. 2 wird in stark vereinfachter Darstellungsweise die Herstellungsweise des porösen Schlauchs gemäß der vorliegenden Erfindung wiedergegeben. Im Bereich der Bezugsziffer 4 befindet sich die Zuführung des vulkanisierten Kautschukrohmaterials, welches beispielsweise als grob zerkleinerte Reifenabfälle zur Verfügung gestellt werden kann.

Das Kautschukrohmaterial wird in einer Zerkleinerungsvorrichtung 5 auf eine Partikelgröße im Bereich von 1,3 - 5,0 mm, vorzugsweise 1,3 - 3,0 mm, vorzugsweise 1,3 - 2,0 mm zerkleinert. Hierbei werden in dem Material zusätzlich Gewebepartikel, die aus dem Reifenmaterial stammen, durch eine Absaugeinrichtung 6 abgesaugt.

In de Zerkleinerungsvorrichtung 5 wird das Kautschukrohmaterial gleichzeitig erwärmt, insbesondere auf eine Temperatur von ca. 60 - 65° C. Auf dem Weg von der Zerkleinerungsvorrichtung zu einem Auffangbehälter für die Partikel aus Kautschuk kann das Material mittels einer Heizeinrichtung 21, die sich an der Außenseite einer Transportleitung 20 befindet, zusätzlich erwärmt werden, so dass das Material in einem erwärmten Zustand mit dem Bindemittel zusammen gebracht wird.

In einem Auffangbehälter 8 wird das erwärmte, zerkleinerte Material an Partikeln zusammen mit in einem Vorratsbehälter 7 befindlichen thermoplastischen Bindemittels, beispielsweise Polyethylen, einem Mischbehälter 9 zugeführt und dort einer innigen Vermischung ausgesetzt. Durch die vorhergehende Erwärmung erfolgt eine optimal Verbindung der Kautschukpartikel mit dem Bindemittel.

Anschließend wird das vermischte Material über eine Schnecke 10 dem Extruder 11 zugeführt. Um den Extruder 11 sind Heizelemente 12 angeordnet.

In einer Extruderdüse 13 mit Dorn wird der Schlauch 1 hergestellt. Unmittelbar nach Verlassen des Schlauchrohlings aus der Extruderdüse folgt eine mit Schlitzen 19 versehenen Schlauchführung 18, innerhalb der der noch warme Schlauchrohling geführt und mittels Wasser aus einer Mehrzahl von Sprühkämmen 14 positionsgenau beaufschlagt und damit abgekühlt wird. Anschließend wird der Schlauch 1 einem Wasserbad 15 zugeführt und dort weiter abgekühlt. Danach wird der Schlauch 1 über ein nachgeschaltetes Gebläse 16 getrocknet. Zuletzt folgt die Aufwicklung des Schlauchs 1 auf eine Vorratsspule 17.

Bei der Herstellung des Schlauchs wird über einen (nicht in den Zeichnungsfiguren dargestellten) Beispritzextruder eine fortlaufende Farbmarkierung in den Schlauch 1 eingebracht.

### BEZUGSZEICHENLISTE

- 1): poröser Schlauch
- 2): Partikel
- 3): Farbmarkierung
- 4): Zuführung
- 5): Zerkleinerungsvorrichtung
- 6): Absaugeinrichtung
- 7): Vorratsbehälter
- 8): Auffangbehälter
- 9): Mischbehälter
- 10): Schnecke
- 11): Extruder
- 12): Heizelemente
- 13): Extruderdüse
- 14): Sprühkamm
- 15): Wasserbad
- 16): Gebläse
- 17): Vorratsspule
- 18): Schlauchführung
- 19): Schlitze
- 20): Transportrohr
- 21): Heizeinrichtung

## Patentansprüche

1. Verfahren zur Herstellung eines porösen Schlauchs (1) zur Bewässerung und/oder Entwässerung mit folgenden Verfahrensschritten:
a) Herstellen eines weitgehend homogenen Gemisches aus Partikeln (2) aus vulkanisiertem Kautschuk sowie Partikeln eines thermoplastischen Bindemittels,
b) Einführen des Gemisches in einen Extruder (11), in welchem es erwärmt wird,
c) Ausformen des Gemisches in Form eines Schlauches (1) über ein Mundstück aus dem Extruder (11),
d) Abkühlen des Schlauches (1),
**dadurch gekennzeichnet, dass**
die Partikel (2) aus vulkanisiertem Kautschuk im Wesentlichen eine Partikelgröße im Bereich von 1,3 - 5,0 mm besitzen.

2. Verfahren nach Anspruch 1,
**dadurch gekennzeichnet, dass**
die Partikel (2) aus vulkanisiertem Kautschuk im Wesentlichen eine Partikelgröße im Bereich von 1,3 - 3,0 mm besitzen.

3. Verfahren nach Anspruch 1,
**dadurch gekennzeichnet, dass**
die Partikel (2) aus vulkanisiertem Kautschuk im Wesentlichen eine Partikelgröße in einem Bereich von 1,3 - 2,0 mm aufweisen.

4. Verfahren nach mindestens einem der vorhergehenden Ansprüche,
**dadurch gekennzeichnet, dass**
das Gemisch mehr als 60 Gew.-%, vorzugsweise mehr als 70 Gew.-% an vulkanisiertem Kautschuk enthält.

5. Verfahren nach einem der vorhergehenden Ansprüche,
**dadurch gekennzeichnet, dass**
vor der Herstellung des homogenen Gemisches die Partikel (2) aus vulkanisiertem Kautschuk erwärmt werden.

6. Verfahren nach Anspruch 5,
**dadurch gekennzeichnet, dass**
die Erwärmung der Partikel (2) aus vulkanisiertem Kautschuk auf eine Temperatur im Bereich von 30 - 70°C, vorzugsweise 40 - 65°C, erfolgt.

7. Verfahren nach einem der Anspüche 5 oder 6,
**dadurch gekennzeichnet, dass**
die Erwärmung der Partikel (2) aus vulkanisiertem Kautschuk mittels Zerkleinerung in einer Zerkleinerungsvorrichtung erfolgt.

8. Verfahren nach einem der Ansprüche 5 bis 7,
**dadurch gekennzeichnet, dass**
das die Erwärmung mittels Warmluft oder Heizstrahlung erfolgt

9. Verfahren nach einem der Ansprüche 5 bis 8,
**dadurch gekennzeichnet, dass**
die Erwärmung mittels einer Heizeinrichtung (21) um eine Transporteinrichtung, insbesondere um ein Transportrohr (20) der Partikel aus vulkanisiertem Kautschuk erfolgt.

10. Verfahren nach einem der vorhergehenden Ansprüche,
**dadurch gekennzeichnet, dass**
mittels eines Beispritzextruders eine Farbmarkierung in den Schlauch (1) eingebracht oder auf den Schlauch (1) aufgebracht wird.

11. Verfahren nach einem der vorhergehenden Ansprüche,
**dadurch gekennzeichnet, dass**
eine Abkühlung des Schlauchs (1) vorzugsweise unter Verwendung mindestens eines Sprühkamms (14) herbeigeführt wird.

12. Verfahren nach einem der vorhergehenden Ansprüche,
**dadurch gekennzeichnet, dass**
der Schlauch (1) einem Wasserbad (15) zugeführt wird und anschließend in einem Luftstrom getrocknet wird.

13. Verfahren nach einem der vorhergehenden Ansprüche,
**dadurch gekennzeichnet, dass**
vor der Herstellung des homogenen Gemisches in einem Verfahrensablauf Gewebepartikel aus dem vulkanisiertem Kautschuk herausgesaugt werden.

14. Poröser Schlauch,
**dadurch gekennzeichnet, dass**
er durch das Verfahren gemäß einem der Ansprüche 1 - 13 hergestellt worden ist.

15. Verwendung eines porösen Schlauchs gemäß Anspruch 14 zur Bewässerung von Kulturboden sowie zur Entwässerung von Kulturboden.
